(19) Europäisches Patentamt
European Patent Office
Office européen des brevets

(11) **EP 3 453 669 A1**

(12) **EUROPÄISCHE PATENTANMELDUNG**

(43) Veröffentlichungstag:
**13.03.2019  Patentblatt 2019/11**

(51) Int Cl.:
***B66C 13/08*** *(2006.01)*   ***B66C 13/22*** *(2006.01)*

(21) Anmeldenummer: **17190169.7**

(22) Anmeldetag: **08.09.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(71) Anmelder: **Siemens Aktiengesellschaft**
**80333 München (DE)**

(72) Erfinder:
• **Bock, Marco**
  **91056 Erlangen (DE)**
• **Ladra, Uwe**
  **91056 Erlangen (DE)**
• **Lorz, Fabian**
  **91341 Röttenbach (DE)**

(54) **STEUERUNGSEINRICHTUNG FÜR EIN HEBEZEUG UND VERFAHREN ZU DESSEN BETRIEB**

(57) Eine Steuerungseinrichtung (12) für ein Hebezeug (1) weist eine kinematische Transformation (42,43) auf, wobei eine Raumlage eines Körpers (8,9) und eine Orientierungslage des Körpers (8,9) zur Transformation vorgesehen ist, wobei eine Vielzahl von elektrischen Antrieben ansteuerbar sind. Zur Regelung von zumindest sechs Antrieben des Hebezeugs (1) wird eine kinematische Transformation von Koordinaten eines Körpers (8,9) verwendet.

## FIG 3

EP 3 453 669 A1

## Beschreibung

Die Erfindung betrifft eine Steuerungseinrichtung für ein Hebezeug, insbesondere ein Hubseilwerk und ein Verfahren zum Betrieb des Hebezeugs, insbesondere zur Steuerung. Die Erfindung betrifft auch ein Computerprogrammprodukt, das dazu ausgebildet ist, das Verfahren umzusetzen und gleichermaßen betrifft die Erfindung ein Hebezeug.

Hebezeuge sind beispielsweise Kräne, Portalkräne, Containerkräne, STS-Kräne, Hubwerke, Hubseilwerke etc. Hebezeuge weisen insbesondere ein Hubseilwerk auf. Hebezeuge werden insbesondere zum Heben und/oder Bewegen von Körpern, welche auch als Last bezeichnet werden können, verwendet. Der Körper wird dabei insbesondere nicht fest geführt, sondern freischwebend oder mitschwebend gehoben. Der Körper ist insbesondere ein Container und/oder ein Spreader zum Heben eines Containers.

Aus EP 2 902 356 A1 ist ein Verfahren zur Dämpfung einer Pendelbewegung einer Last an einem Kran bekannt, bei dem ein Hubantrieb eines Seils angesteuert wird. Über das Seil wird die Last während der Pendelbewegung geneigt, um ein Drehmoment hervorzurufen, das der Pendelbewegung entgegenwirkt. Alternativ kann der Schwerpunkt der Last angehoben und/oder gesenkt werden um der Pendelbewegung entgegenzuwirken.

Die Druckschrift DE 20 02 745 A1 offenbart ein Verfahren zur Unterdrückung von Pendelungen einer an einem Kran aufgehängten Last. Dabei wird eine Geschwindigkeit einer Laufkatze an eine mittlere Periodendauer der pendelnden Last angepasst. In einem ersten Bereich der ersten Periode erfolgt eine maximale Beschleunigung und im letzten Bereich der letzten Periode eine gleich hohe Verzögerung der Laufkatze durchgeführt.

Aus der WO 2016/161470 A1 ist eine Transporteinrichtung zum Transport zumindest eines Containers oder einer sonstigen Last bekannt, wobei die Transporteinrichtung zumindest eine Laufkatze und zumindest eine Lastaufnahmevorrichtung und zumindest acht Hubseile aufweist, und die Lastaufnahmevorrichtung Verbindungseinrichtungen zur Befestigung des Containers oder der sonstigen Last aufweist und mittels der Hubseile heb- und senkbar an der Laufkatze hängt, wobei die Hubseile auf an der Laufkatze drehbar gelagerten Seiltrommeln aufwickelbar sind, wobei jedes Hubseil auf einer eigenen Seiltrommel aufwickelbar und/oder zumindest zum Teil aufgewickelt ist und bei allen Seiltrommeln die Drehzahl und/oder die Drehrichtung jeweils individuell einstellbar ist.

Aus den Stuttgarter Beiträgen zur Produktionsforschung ist ein Beitrag zum Thema "Force Control of Cable-Driven Parallel Robots" von Werner Kraus bekannt. In dieser Dissertation wird eine Klasse von Robotern untersucht, die Seile zur Kraftübertragung einsetzt. Da Seile nur Zugkräfte übertragen, stellen die sogenannten parallelen Seilroboter hohe Anforderung an ihre Regelung. Die in dieser Arbeit zu Grunde gelegten Seilroboter besitzen mehr Seile als Bewegungsfreiheitsgrade der Plattform und zählen damit zur Klasse der redundanten Roboter. Die Redundanz erlaubt es, die Seile gegeneinander zu verspannen. In dieser Arbeit werden zunächst ein Ansatz zur Regelung der Plattformposition und eine synchrone Regelung der Seilkräfte vorgeschlagen. Hierzu werden auf Basis der elastischen Seile dynamische Modelle entwickelt und auch die Vorwärtskinematik erweitert. Mit dem vorgeschlagenen Verfahren zur Berechnung der Seilkräfte lässt sich die interne Verspannung der Seile stufenlos einstellen. Die Untersuchungen zeigen, dass sich durch die Änderung der Vorspannung die Eigenfrequenzen der Plattform um 15-30% verschieben lassen. Durch die Wahl einer geringen Seilverspannung lässt sich der Energieverbrauch bei bleibender Leistung des Roboters um bis zu 20% senken. Zur Verifikation des Regelungskonzeptes wird die Positionsgenauigkeit des Roboters experimentell untersucht. Als Referenz dient die Steuerung des Roboters auf Basis eines geometrischen Modells, welches keine geschlossenen Regelkreise für die Plattformposition und die Seilkräfte besitzt. Im Zentrum des Arbeitsraumes konnte mit beiden Ansätzen eine vergleichbare Genauigkeit mit Nutzlast von 80 kg von etwa 70 mm und 2.5° erreicht werden. Auch am Arbeitsraumrand kann mit dem vorgeschlagenen Verfahren eine vergleichbare Genauigkeit erreicht werden, da die Seile unter Spannung gehalten werden. Für Bearbeitungsprozesse wie z.B. Schleifen und gekannte hybride Positions- und Kraftregelung auf Seilroboter übertragen. Mit dem Regelungsansatz kann die Roboterplattform in einer gewünschten Richtung eine Kontaktkraft aufbringen, währenddessen die Plattform in den verbleibenden Richtungen positionsgesteuert verfahren kann. Zur Mensch-Roboter-Kooperation wird eine Admittanzregelung vorgeschlagen. Die Plattform simuliert dabei ein Feder-Masse-Dämpfer-System, mit Hilfe dessen ein virtueller Arbeitsraum realisiert wird. Die Evaluierung zeigt, dass eine Bandbreite bis 13 Hz dargestellt werden kann.

Im Bereich der Hebezeuge herrscht Bedarf an einem verbesserten Betriebsverfahren, durch das beispielsweise eine verbesserte Ausnutzung von Seilen möglich ist. Hierdurch können beispielsweise auch elektrische Antriebe geringerer Leistung eingesetzt werden. Im Betrieb sind die Beanspruchungen der eingesetzten mechanischen und/oder elektrischen Komponenten zu reduzieren.

Zum Transport von Containern werden Kräne verwendet. Sowohl beim Aufnehmen des Containers mit dem (an Seilen aufgehängten) Spreader als auch beim Absetzen des Containers auf z.B. einem LKW oder auf einem Containerstapel sind schnelle und genaue Positionierungen in alle Raumrichtungen und alle Drehrichtungen notwendig. Nicht alle Bewegungrichtungen können durch die typischen Kranachsen Katze, Hubwerk und Gantry (letzteres nur bei Stapel- oder Portalkranen vorhanden) realisiert werden. Zumindest die Drehungen des Spreaders/Containers sind damit derzeit nicht möglich. Deswegen werden Kräne mit Zusatzsystemen ausgerüstet, um diese Drehbewegungen zu realisieren. Bei STS-Kränen (insbesondere zum Beladen und/oder Entladen eines Schiffes) sind dies Hydraulikzylinder, welche die Positionen einzelner Seile des Hubwerkes (Hubwerksseile) modifizieren. Bei Stapelkränen (insbesondere zum Ordnen bzw. Umordnen von Containern im hinteren Bereich des Terminals) findet man am Spreader montierte Hydraulikzylinder.

Eine Aufgabe der Erfindung ist es ein Hebezeug zu verbessern, insbesondere ist es eine Aufgabe einen Umgang mit einem Hubseilwerk zu verbessern.

Eine Lösung der Aufgabe gelingt bei einer Steuerungseinrichtung für ein Hebezeug nach Anspruch 1 bzw. bei einem Verfahren zur Steuerung eines Hebezeuges nach Anspruch 8. Weitere Ausgestaltungen ergeben sich beispielsweise nach den Ansprüchen 2 bis 7 bzw. 9 bis 19.

Eine Steuerungseinrichtung für ein Hebezeug weist eine kinematische Transformation auf. Dabei ist eine Raumlage eines Körpers und eine Orientierungslage des Körpers zur Transformation vorgesehen. Mittels der Steuerungseinrichtung sind eine Vielzahl von elektrischen Antrieben ansteuerbar. Die Steuerungseinrichtung kann Steuerungsaufgaben und/oder Regelungsaufgaben durchführen und weist insbesondere zumindest einen Prozessor, einen Speicher und eine Vielzahl von Ausgängen und/oder Eingängen auf. Die Ausgänge und/oder Eingänge können auch über ein Bussystem realisiert sein, an welches die Steuerungseinrichtung anschließbar ist. Der Körper ist insbesondere eine Last, wie z.B. ein Spreader, ein Container, ein Spreader mit Container, usw. Die Steuerungseinrichtung kann als eine Baueinheit realisiert sein, oder als eine Kombination von zumindest zwei Baueinheiten, also eine Vielzahl von Baueinheiten, welche datentechnisch miteinander verbunden sind. Dies gelingt beispielsweise über einen Rückwandbus, über ein Buskabel, über eine Funkverbindung, etc. Die Steuerungseinrichtung ist zur Ausführung von Steuerungs- und/oder Regelungsverfahren ausgeführt. Insbesondere ist die Steuerungseinrichtung derart ausgestaltet, dass bis zu 6 Freiheitsgrade eines Körpers (im Folgenden auch Last genannt), insbesondere eines starren Körpers, also insbesondere die Lage (XC,YC,ZC) (im Folgenden auch Raumlage genannt) und die Orientierung $(\alpha,\beta,\gamma)$ (im Folgenden auch Orientierungslage genannt) im Raum beeinflusst werden können. Die Position, bzw. bei einer Bewegung die Positionen, können mathematisch mit $p = [XC,YC,ZC,\alpha,\beta,\gamma]^T$ dargestellt werden. Die Steuerungseinrichtung ist insbesondere zur Positionierung bzw. Bewegung eines Körpers mit einer Seilkinematik, insbesondere einer parallelen Seilkinematik mit m separat ansteuerbaren Seilen vorgesehen. Damit kann der Körper exakt positioniert oder gegebenenfalls auf einer vorgegebenen Bahn geführt werden. Für die betrachtete Seilkinematik entsprechen die 6 beschriebenen Freiheitsgrade den Lastkoordinaten, während die Lage der m Antriebe im Antriebskoordinatensystem betrachtet werden kann. Die Antriebe weisen insbesondere elektrische Motoren auf, welche geregelt werden können. Ein elektrischer Motor bildet mit einer Umlenkrolle für ein Seil oder mit einem Getriebe, oder mit einem Flaschenzug, etc. einen Antriebsstrang. Über die m Antriebsstränge können Drehmomente $d = [d_1, ..., d_m]^T$ eingeprägt werden, um eine Strecke (insbesondere ein Seilhubwerk) und/oder den Körper (Last) auf der vorgegebenen Bahn zu führen. Für diese Bahn wird beispielsweise steuerungsseitig, anhand eines mathematischen Modells ein optimierter Drehmomentenverlauf $d_{ffw} = [d_{ffw,1}, ..., d_{ffw,m}]^T$ berechnet. Wird beispielsweise eine Vorsteuerung verwendet, kann für die Vorsteuerung der Drehzahl $n_{soll} = [n_{soll,1}, ..., n_{soll,m}]^T$ mithilfe der Kinematik-Transformation (abgekürzt Kin-Trafo) die Sollgeschwindigkeiten aus dem sechsdimensionalen Koordinatensystem der Last in das $m$-dimensionale Koordinatensystem der Antriebe überführt werden. Die Kinematik des Hebezeugsystems ist insbesondere nichtlinear.

In einer Ausgestaltung der Steuerungseinrichtung das Hebezeug für ein Bewegen des Körpers durch das Hebezeug überbestimmt, wobei eine Optimierungseinrichtung zur Optimierung von Seilkräften vorgesehen ist. Bei einem Hebezeug, insbesondere mit Hubseilen, ist ein mechanisches System realisierber, bei dem die Hubwerksseile an mehreren (jeweils durch elektrische Antriebe bewegte) Seilrollen befestigt sind. Je nach Anzahl der Seile und Seilrollen kann beispielsweise der Spreader und/oder Container in mehr oder weniger Freiheitsgraden bewegt werden. Die Steuerungseinrichtung ist zur Steuerung und/oder Regelung eines derartigen Systems ausgebildet um eine Positionierbewegung zu realisieren. In einer Ausgestaltung einer Steuerungseinrichtung wird zur Steuerung und/oder Regelung derartiger Systeme z.B. eine Ablaufkette mit folgenden Funktionen erstellt: Trajektorienberechnung für Container und/oder Spreader, kinematische Transformation, kaskadenregelung der (elektrischen) Antriebe.

In einer Ausgestaltung der Steuerungseinrichtung weist diese einen Lageregler auf, wobei der Lageregler insbesondere einen Eingang für die Raumlage und einen Eingang für die Orientierungslage aufweist.

In einer Ausgestaltung der Steuerungseinrichtung weist diese ein erstes Modell für den Körper auf. Beispielsweise werden über das erste Modell, welches insbesondere als mathematische Modell realisiert ist, in den Vorsteuerungspfaden ermittelte Drehzahlen $n_{soll}$ und Drehmomente $d_{ffw}$ an den jeweiligen Vergleichseinrichtungen der Regelschleifen aufgeschaltet. So sind 6, 7, 8 oder mehr elektrische Antriebe regelbar. Das Regelungskonzept regelt insbesondere die aus Modellungenauigkeiten und Störungen resultierenden Regelabweichungen aus. Die Antriebsregelung arbeitet dabei insbesondere im Antriebskoordinatensystem und die Lageregelung im Koordinatensystem der Last.

In einer Ausgestaltung der Steuerungseinrichtung wird anhand eines mathematischen Lastmodells eine optimierte Drehmomentenvorsteuerung $d_{ffw} = [d_{ffw,1}, ..., d_{ffw,m}]^T$ für die $m$ Antriebseinheiten (insbesondere m=8) berechnet. Hierzu sind die Masse der Last und die Lage des Massenmittelpunktes bekannt.

In einer Ausgestaltung der Steuerungseinrichtung wird ein Lastmodell verwendet. Aus einer Sollbahn $(p,\dot{p},\ddot{p})$

gemäß einer Trajektorie $p(t)$ werden mit einer 6-dimensionalen Bewegungsgleichung

$$w = M(p)\ddot{p} + N(\dot{p},p) + G(p)$$

mit:

| | |
|---|---|
| $M(p)$ | die Massenmatrix |
| $N(\dot{p},p)$ | die Matrix der Zentrifugal- und Corioliskräfte |
| $G(p)$ | die Matrix der Gewichtskräfte |

die auf die Last wirkenden Kräfte berechnet. Der Kraftvektor $w$ bezieht sich auf die Lastkoordinaten.

Mit der Gleichgewichtsbedingung $A^T(p)F = w$ kann ein sechsdimensionale Kraftvektor $w$ in einen Seilkraftvektor $F$ transformiert werden. Der Seilkraftvektor $F = [F_1, ...,F_m]^T$ beinhaltet die betragsmäßige Seilkraft jedes Seils in Richtung der Antriebskoordinaten. Ein Aufstellen der Gleichgewichtsbedingung erfolgt anhand der geometrischen Anordnung der Seile. Die Matrix $A^T(p)$ beinhaltet unter anderem die $m$ normierten Seilkraftrichtungsvektoren und die Lage der Kraftangriffspunkte.

In einer Ausgestaltung der Steuerungseinrichtung weist diese einen Seilkraftrechner bzw. eine Seilkraftberechnung auf. Sind in dem mechanischen Aufbau mehr Seile als Bewegungsfreiheitsgrade der Last separat ansteuerbar $m > 6$, ist die Seilkinematik überbestimmt. Damit besteht die Möglichkeit den Kraftvektor $w$ nach bestimmten Optimierungskriterien auf die $m$ Seile zu verteilen. Ein Optimierungskriterium ist die Minimierung der maximalen Seilkraft:

$$\min ( \max(F))$$

mit: $A^T(p)F = w,$

$$F > 0$$

Dieses Kriterium zielt darauf ab, die maximale Kraft im Antrieb so gering wie möglich zu halten, um die im System enthaltene Antriebsredundanz für eine günstige Antriebsdimensionierung auszunutzen.

Ein anderes Optimierungskriterium ist die Maximierung der minimalen Seilkraft:

$$\max ( \min(F))$$

mit: $A^T(p)F = w,$

$$F > 0$$

Dieses Kriterium zielt darauf ab, das Verspannungs-Niveau zu optimieren. Mit einem optimierten Verspannungs-Niveau ist die Seilkinematik robuster bzw. steifer gegenüber Lastpendeln und damit auch weniger anfällig gegen äußere Störeinflüsse wie z.B. Wind.

Wenn für eine Lastpositionierung nur die Anfangs- und Endposition von Bedeutung ist und während des Verfahrvorgangs die Last-Freiheitsgrade (Lage und Orientierung im Raum) nur innerhalb eines Toleranzbandes eingehalten werden müssen, können diese 6 Freiheitsgrade zur Optimierung herangezogen werden. Diese zusätzlichen Freiheitsgrade können gemäß den oben genannten Kriterien zur Optimierung genutzt werden (optimierte Bahn), um eine weitere Verbesserung der Seilkraftverteilung zu erhalten.

In einer Ausgestaltung der Steuerungseinrichtung weist diese ein zweites Modell für einen Antriebsstrang auf. Dies betrifft beispielsweise einen Antriebsstrang oder eine Vielzahl von Antriebssträngen, welche in Ihrer Gesamtheit wieder einen gemeinsamen Antriebsstrang bilden. So werden z.B. gemäß eines Modells des Antriebsstrangs die optimierten Seilkräfte $F$ mit Hilfe des Antriebsstrang-Modells in die Drehmomente der Antriebsmotoren (z.B. m=8) umgerechnet:

$$d = RF + I\ddot{\psi}$$

mit:

$I = diag[I_1,...,I_m]$      Diagonalmatrix Trägheitsmomente des Antriebes
$\ddot{\psi} = [\ddot{\psi}_1 ...,\ddot{\psi}_m]^T$      Winkelbeschleunigung der $m$ Antriebsstränge
$R = diag[r_1,...,r_m]$      Diagonalmatrix der Übersetzungsverhältnisse.

Die Matrix $R$ beinhaltet insbesondere alle Getriebeübersetzungen, die Durchmesser jeder einzelnen Seiltrommel, sowie das über die Umlenkrollen einhergehende Übersetzungsverhältnis eines Flaschenzugs.

In einer Ausgestaltung der Steuerungseinrichtung weist diese eine Vorsteuerung auf. Für eine gegebene Sollbahn $(p,\dot{p},\ddot{p})$ in Lastkoordinaten wird mithilfe des mathematischen Modells eine optimierte Drehmomentenvorsteuerung $d_{ffw}$ berechnet. Dies betrifft insbesondere acht elektrische Antriebe für 8 Seile. Durch die 8 Seile ist das System überbestimmt. Durch die Überbestimmung kann eine Lastverteilung erfolgen und die Vorsteuerung zur Kraftvorsteuerung herangezogen werden. Die Last kann beispielsweise gleich auf die Seile verteilt werden.

Nach einem Verfahren zur Steuerung (zum Steuern und/oder Regeln) eines Hebezeuges, wird zur Regelung von zumindest sechs Antrieben eine kinematische Transformation von Koordinaten eines Körpers verwendet. Die Steuerung des Hebezeuges betrifft also auch dessen Regelung. Die kinematische Transformation ist insbesondere nichtlinear. In einer Ausgestaltung des Hebezeuges weist dieses 7 oder mehr elektrische Antriebe zur Bewegung von Seilen auf, welche zum Anheben und/oder Absenken einer Last vorgesehen sind.

In einer Ausgestaltung des Verfahrens betreffen die Koordinaten eine Raumlage des Körpers und eine Orientierungslage des Körpers.

In einer Ausgestaltung des Verfahrens sind eine Vielzahl von elektrischen Antrieben zur Positionierung des Körpers vorgesehen, wobei durch die Vielzahl der elektrischen Antriebe eine Überbestimmung erzeugt wird, wobei die Überbestimmung zu einer Verteilung von Kräften, welche auf Seile wirken, verwendet wird.

In einer Ausgestaltung des Verfahrens die Bewegung des Körpers (Last) durch eine Trajektorie vorgegeben.

In einer Ausgestaltung des Verfahrens sind Koordinatenwerte Eingangsgrößen einer Lageregelung, wobei Ausgangsgrößen der Lageregelung transformiert werden, wobei zumindest eine Eingangsgröße einer Antriebsregelung auf zumindest einer Ausgangsgröße des kinematischen Transformators basiert.

In einer Ausgestaltung des Verfahrens wird dieses bei einem Hubseilwerk mit mehreren Seilen verwendet, die mit dem Spreader verbunden sind, der wiederum die Last aufnimmt, wobei jedes Seil separat über motorgetriebene Seilwinden ansteuerbar ist. Es können auch mehrere Seile auf einen Antrieb derart zusammengeführt werden, so dass mindestens zwei Antriebe vorhanden sind und wobei ein Messsytem zur Bestimmung der Lage und Orientierung der Last im Raum vorhanden ist bzw. über ein Beobachtermodell ergänzt wird.

In einer Ausgestaltung des Verfahrens wird aus einem Sollgeschwindigkeitsverlauf einer Trajektorie des Körpers unter Verwendung einer Kinematik-Transformation ein Drehzahlsollwertverlauf der Antriebe berechnet.

In einer Ausgestaltung des Verfahrens wird eine Seilkraftberechung verwendet.

In einer Ausgestaltung des Verfahrens wird eine Vorsteuerung insbesondere für Seilkräfte verwendet.

In einer Ausgestaltung des Verfahrens werden aus einer Solltrajektorie der Last über ein mathematisches Modell die Seilkräfte für die Kraftvorsteuerung der Antriebe.

In einer Ausgestaltung des Verfahrens wird zur Berechnung der Vorsteuerung ein Lastmodell und/oder ein Antriebsstrangmodell verwendet.

In einer Ausgestaltung des Verfahrens erfolgt die Regelung in einer Kaskadenstruktur. Bei der Antriebsregelung wird für die Drehzahlregelung ein PI-Regler genutzt. Im Gegensatz zur Antriebsregelung erfolgt die Lageregelung im Koordinatensystem der Last. Die Stellgröße der Lageregelung wird durch die Kinematik-Transformation in das Koordinatensystem der Antriebe überführt. Die Reglerparameter des Drehzahlregelkreises werden insbesondere "dämpfunqsoptimal" eingestellt, so dass eine Pendelbewegung der Last möglichst nicht angeregt wird. Aufgrund der hubhöhenabhängigen Frequenz der Pendelbewegung, werden die Regelparameter ebenfalls in Abhängigkeit der Hubhöhe adaptiert werden.

In einer Ausgestaltung des Verfahrens können Mithilfe der modellbasierten Vorsteuerung die erwarteten Drehzahlen und Drehmomente an den jeweiligen Vergleichseinrichtungen der inneren Regelschleifen aufgeschaltet werden. Das Regelungskonzept muss lediglich die aus Modellungenauigkeiten und Störungen resultierenden Regelabweichungen ausregeln.

In einer Ausgestaltung des Verfahrens erfolgt die Antriebsregelung (z.B. für m=8) in Abhängigkeit einer Hubhöhe, also adaptiert auf die Hubhöhe, wobei die Antriebsregelung derart an eine Streckendynamik der Bewegung des Körpers (Last) angepasst wird.

In einer Ausgestaltung des Verfahrens erfolgt eine Lageregelung in den Koordinaten des Körpers, wobei insbesondere eine Stellgröße für die Last über eine Kinematik-Transformation in Antriebskoordinaten umgerechnet wird.

In einer Ausgestaltung des Verfahrens werden bei einem Hubseilwerk, welches überbestimmt ist und insbesondere mehr Antriebe als zu positionierende Freiheitsgrade aufweist, die zusätzlichen Freiheitsgrade für eine Optimierung der Vorsteuerung verwendet.

In einer Ausgestaltung des Verfahrens führt die Optimierung zur Minimierung der maximalen Seilkraft.

In einer Ausgestaltung des Verfahrens wird die Optimierung zur Maximierung des Verspannungs-Niveaus für die Seile des Hebezeugs herangezogen.

In einer Ausgestaltung des Verfahrens werden zur Bestimmung einer Lage oder einer Trajektorie der Last im Raum die Freiheitsgrade der Lage bzw. Orientierung im Raum zur Optimierung genutzt.

In einer Ausgestaltung des Verfahrens wird zur Berechnung einer Trajektorie ein Maximalwert einer Beschleunigung in Abhängigkeit einer Hubhöhe adaptiert.

In einer Ausgestaltung des Verfahrens wird zur Berechnung einer Trajektorie ein Maximalwert einer Beschleunigung in Abhängigkeit einer Schwerpunktlage des Körpers adaptiert.

In einer Ausgestaltung des Verfahrens wird eine Steuerungseinrichtung in einer der beschriebenen Ausgestaltungen verwendet.

Durch die Steuerungseinrichtung zum Steuern und/oder Regeln bzw. durch das beschriebene Verfahren können sich verschiedene Vorteile ergeben. So kann eine Optimierung der Antriebsdimensionierung eines Hubseilwerkes nach verschiedenen Kriterien erfolgen. So kann durch das sich ergebende Antriebskonzept eine exakte Positionierung der Last (insbesondere Container) mit einer Regelgüte von etwas 1 cm erreicht werden. So kann durch Berücksichtigung folgender Abhängigkeiten im Antriebskonzept durch Anpassung der Regelparameter bzw. der maximalen Beschleunigungswerte eine optimierte Positionierung erreicht werden:

- Abhängigkeit der Hubhöhe und/oder
- Abhängigkeit von der Beladung (Masse) und/oder
- Abhängigkeit von der Schwerpunktlage der Last.

Durch die Steuerungseinrichtung zum Steuern und/oder Regeln bzw. durch das beschriebene Verfahren kann insbesondere ein 8-Seil Hubwerk mit Einzelantrieben verbessert werden. Zudem können sich daraus neue Wege für andere Anwendungen und Bereiche in der Kranautomatisierung ergeben.

Die der Erfindung zugrundeliegende Aufgabenstellung wird auch durch ein Computerprogrammprodukt gelöst, das dazu ausgebildet ist das Verfahren zu durchzuführen, bzw. die Funktionen der Steuerungseinrichtung zu realisieren. Das Computerprogrammprodukt ist insbesondere dazu ausgebildet, zumindest eine Ausführungsform des oben skizzierten Verfahrens an einem Hebezeug wie einem Kran umzusetzen.

Die der Erfindung zugrundeliegende Aufgabenstellung wird auch durch ein Hebezeug gelöst, welches die beschriebene Steuerungseinrichtung aufweist und/oder zur Durchführung des Verfahrens vorgesehen ist.

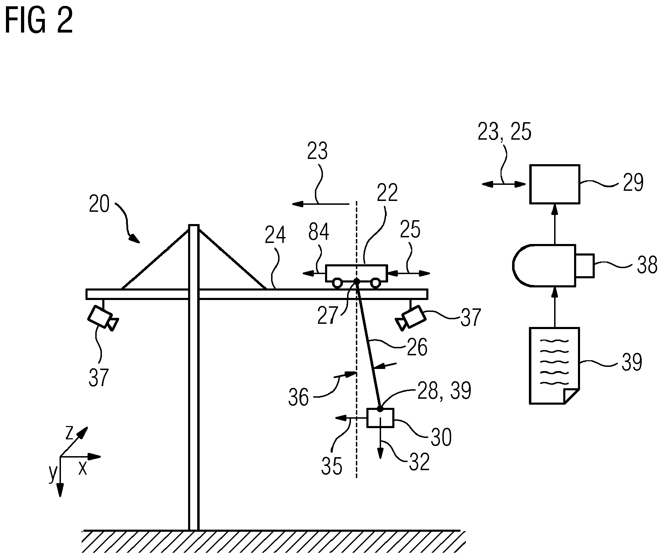

Die Erfindung wird im Folgenden beispielhaft anhand der Figuren 1 bis 7 näher erläutert. Gleiche Merkmale sind mit gleichen Bezugszeichen versehen. Merkmale einzelner Ausgestaltungen sind untereinander kombinierbar. Es zeigen im Einzelnen:

FIG 1   eine Containerbrücke als ein Beispiel für ein Hebezeig;
FIG 2   einen Kran;
FIG 3   ein Steuerungs- und Regelungskonzept;
FIG 4   ein Steuerungskonzept mit einer Seilkraft-Berechnung;
FIG 5   Kräfte an einem Spreader;
FIG 6   eine optimierte Bahn und
FIG 7   eine Regelungsstruktur.

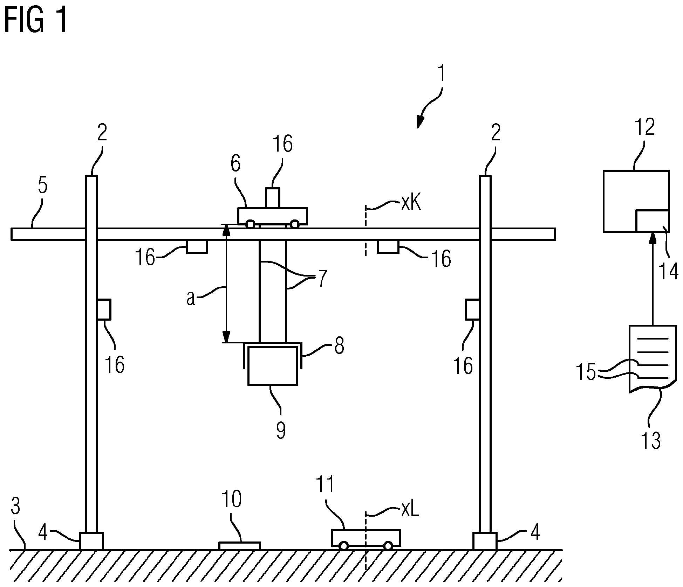

Die Darstellung nach FIG 1 zeigt eine Containerbrücke 1. Die Containerbrücke 1 weist eine Mehrzahl von Stützpfeilern 2 auf, mittels derer die Containerbrücke 1 auf einem Untergrund 3 angeordnet ist. Die Stützpfeiler 2 sind auf Schienen 4 verfahrbar. Die Verfahrrichtung ist orthogonal zur Darstellung in FIG 1, also in die Bildebene hinein bzw. aus ihr heraus. Die Stützpfeiler 2 tragen eine Traverse 5. Die Traverse 5 verläuft parallel zum Untergrund 3 und damit ebenfalls horizontal. Die Containerbrücke 1 weist weiterhin eine Laufkatze 6 auf. Die Laufkatze 6 ist auf der Traverse 5 relativ zum Untergrund verfahrbar. Die Verfahrrichtung der Laufkatze 6 ist horizontal und orthogonal zur Verfahrrichtung der Stützpfeiler 2. Die Laufkatze 6 ist über ein Seilsystem 7 mit einem Spreader 8 verbunden. Durch Verlängern bzw. Verkürzen des Seilsystems 7 kann der Spreader 8 abgesenkt bzw. angehoben werden. Zusammen mit dem Spreader 8 wird gegebenenfalls auch ein Container 9, der vom Spreader 8 gegriffen ist, mit abgesenkt bzw. angehoben. Zu jedem Zeitpunkt korrespondiert eine jeweils aktuelle Last der Laufkatze 6 mit der Masse des Spreaders 8 zuzüglich der Masse des vom Spreader 8 gegriffenen Containers 9. Es kann zwischen der Last der Laufkatze 6 und deren Belastung unterschieden werden. Die Last ist der von der Laufkatze 6 verfahrene Gegenstand als solcher, also der Spreader 8 mit oder ohne Container 9. Die Belastung der Laufkatze 6 ist die durch die Last auf die Laufkatze 6 ausgeübte Gewichtskraft. Wenn beispielsweise von der Laufkatze 6 der leere Spreader 8 verfahren wird und die Masse des Spreaders 8 5 Tonnen beträgt, so ist die Last der Spreader 8 und die Belastung 5 Tonnen. Es ist eine Lastumschlagstelle 10, 11 aufgezeigt. Es kann sich bei der Lastumschlagstelle 10, 11 beispielsweise um eine ortsfeste Lastumschlagstelle 10 handeln, d.h. eine Lastumschlagstelle, die auf dem Untergrund 3 nicht verfahrbar ist. Ein typisches Beispiel einer derartigen Lastumschlagstelle 10 ist ein Lagerplatz für einen Container 9. Alternativ kann es sich bei der Lastumschlagstelle 10, 11 um eine mobile Lastumschlagstelle 11 handeln, d.h. eine Lastumschlagstelle, die auf dem Untergrund 3 verfahrbar ist. Ein typisches Beispiel einer derartigen Lastumschlagstelle 11 ist ein AGV (automated guided vehicle). Das Umschlagsystem weist weiterhin eine Kransteuerung 12 auf. Die Kransteuerung 12 ist ein Beispiel für eine Steuerungseinrichtung. Von der Kransteuerung 12 wird das Umschlagsystem gesteuert. Die Kransteuerung 12 ist mit einem Computerprogramm 13 programmiert. Das Computerprogramm 13 ist insbesondere in einem Speicher 14 der Kransteuerung 12 in maschinenlesbarer Form hinterlegt. Das Computerprogramm 13 umfasst Maschinencode 15, der von der Kransteuerung 12 abarbeitbar ist. Die Abarbeitung des Maschinencodes 15 durch die Kransteuerung 12 bewirkt, dass die Kransteuerung 12 ein Steuerverfahren für das Umschlagsystem ausführt. Im Übrigen sind Sensoren 16 wie Kameras dargestellt. Mit diesen kann beispielsweise die Position der Last 8, welche einen Abstand a von der Katze 6 aufweist, festgestellt werden.

Die Darstellung nach FIG 1 zeigt schematisch in einer Seitenansicht eine Laufkatze 22 abgebildet, die zu einem Kran 20, als weiteres Beispiel für ein Hebezeug gehört. Der Kran 20 weist eine Führungsschiene 24, auf der die Laufkatze 22 entlang einer Bewegungsachse 25 beweglich angeordnet ist. Die Laufkatze 22 verfügt über einen Laufkatzenantrieb, der ein Antriebsmoment bereitstellt und eine Bewegung 23 entlang der Bewegungsachse 25 erlaubt. An der Laufkatze 22 ist über zwei Hubwerkseile 26 eine Last 30 aufgehängt. Die Hubwerkseile 26 sind jeweils an laufkatzenseitigen Aufhängungspunkten 27 und an lastseitigen Aufhängungspunkten 28 befestigt. In jedem der laufkatzenseitigen Aufhängungspunkte 27 liegt eine Lagerreaktion vor, die je nach der Bauform des jeweiligen laufkatzenseitigen Aufhängungspunkts 27 Lagerreaktionskräfte und/oder Lagerreaktionsmomente umfasst. Jedem der Hubseilwerke 26 ist ferner ein Hubantrieb zugeordnet, über den das zugehörige Hubwerkseil 26 auf- oder abrollbar ist. Ein Aufrollen bzw. Abrollen eines Hubwerkseils 26 verringert bzw. erhöht dessen freie Länge. Durch die Bewegung 23 der Laufkatze 22 erfolgt eine Auslenkung 35,32 der Last 30 aus der Vertikalen. Durch die Auslenkung der Last 20 ergibt sich zwischen einem Lastbezugspunkt 29 und einem Laufkatzenbezugspunkt 21 eine Distanz 33. Durch die Auslenkung der Last 30 wird u.U. eine Pendelbewegung 36 hervorgerufen, die ein Platzieren der Last 30 erschweren kann. Die Laufkatze 22 ist mit einer Steuerungseinrichtung 29 versehen, auf der ein Computerprogrammprodukt 39 ausführbar abgespeichert ist. Das Computerprogrammprodukt ist dazu ausgelegt, zumindest eine Ausführungsform des erfindungsgemäßen Verfahrens durchzuführen. Mit dem Computerprogrammprodukt können Signale einer Meßvorrichtung 38 mit berücksichtigt werden.

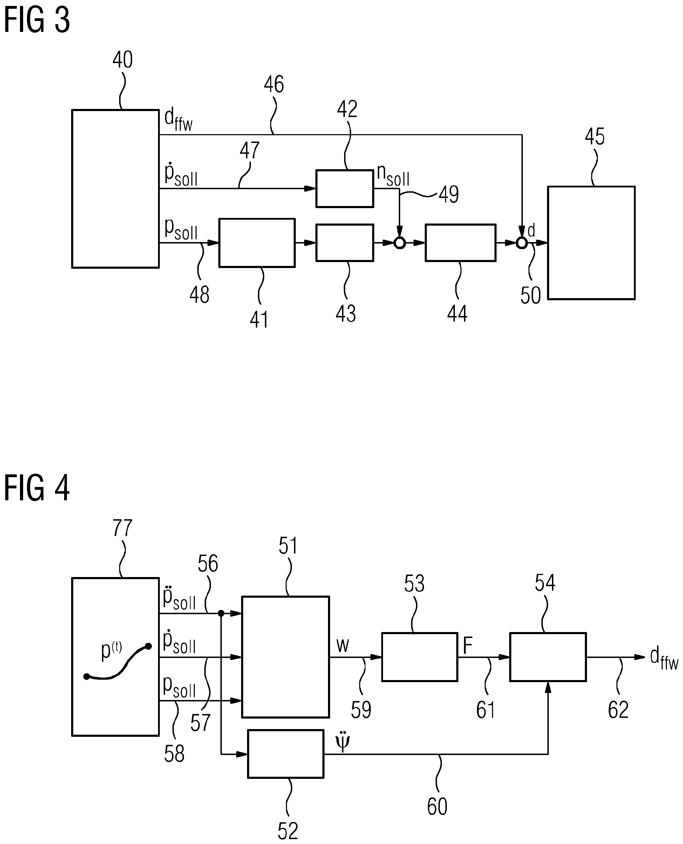

Die Darstellung nach FIG 3 zeigt ein Steuerungs- und Regelungskonzept. Gezeigt ist eine Steuerung und Stellgrößengenerierung 40, welche Parameter abhängig von einer Lage $p$ ausgibt. Die Lage betrifft insbesondere eine Raumlage eines Punktes (XC,YC,ZC) und eine Orientierung ($\alpha,\beta,\gamma$) eines Körpers im Raum, mit $p = [XC,YC,ZC,\alpha,\beta,\gamma]^T$. Über eine Anzahl von $m$ Antriebssträngen mit elektrischen Motoren können Drehmomente $d = [d_1, ..., d_m]^T$ 50 vorgegeben werden, um beispielsweise eine Strecke 45 (das Seilhubwerk) auf der vorgegebenen Bahn zu führen. Für diese Bahn wird Steuerungsseitig, anhand eines mathematischen Modells ein optimierter Drehmomentenverlauf $d_{ffw} = [d_{ttw,1}, ..., d_{ffw,m}]^T$ 46 berechnet. Für die Vorsteuerung der Drehzahl $n_{soll} = [n_{soll,1}, ..., n_{soll,m}]^T$ werden mithilfe der Kinematik-Transformation (Kin-Trafo) die Sollgeschwindigkeiten aus dem sechsdimensionalen Koordinatensystem der Last in das $m$-dimensionale Koordinatensystem der Antriebe überführt. So geht die Sollwertposition $p\_soll$ in eine Lageregelung 41. Danach wird eine kinematische Transformation 43 durchgeführt, wonach dieser Wert zusammen mit der Solldrehzahl $n_{soll}$ in einer Antriebsregelung 44 verarbeitet wird. Die z.B. über ein mathematisches Modell in den Vorsteuerungspfaden ermittelten Drehzahlen $n_{soll}$ und Drehmomente $d_{ffw}$ werden an den jeweiligen Vergleichseinrichtungen der Regelschleifen aufgeschaltet. Die Solldrehzahl $n_{soll}$ ergibt sich aus einer ersten Ableitung von $p\_soll$ 47 und einer anschließenden kinematischen Transformation 42.

Die Darstellung nach FIG 4 zeigt einen weiteren Teil eines Steuerungskonzepts. Neben einer Trajektoriengenerierung 77 ist ein Lastmodell 51 dargestellt. Eine Sollbahn ist durch die Sollwerte von $p$ 58, $\dot{p}$ 57, $\ddot{p}$ 56 gegeben. Aus der Sollbahn ($p,\dot{p},\ddot{p}$) 58,57,56 werden mit der 6-dimensionalen Bewegungsgleichung 59 $w = M(p)\ddot{p} + N(\dot{p},p) + G(p)$ mit:

$M(p)$      die Massenmatrix
$N(\dot{p},p)$      die Matrix der Zentrifugal- und Corioliskräfte
$G(p)$      die Matrix der Gewichtskräfte

die auf die Last wirkenden Kräfte F 61 berechnet, wobei hierfür ein Lastmodell 51 vorgesehen ist. Der Kraftvektor $w$ 59 bezieht sich auf die Lastkoordinaten. Über eine Seilkraftberechnung 53 ergeben sich die Kräfte 61. Im Steuerungskonzept wird anhand eines mathematischen Lastmodells eine optimierte Drehmomentenvorsteuerung $d_{ffw} = [d_{ffw,1}, ..., d_{ffw,m}]^T$ 62 für die $m$ Antriebseinheiten berechnet. Hierzu müssen die Masse der Last und die Lage des Massenmittelpunktes bekannt sein. Für eine gegebene Sollbahn ($p,\dot{p},\ddot{p}$) in Lastkoordinaten wird mithilfe des mathematischen Modells eine optimierte Drehmomentenvorsteuerung $d_{ffw}$ auf Basis eines Modells 54 für den Antriebsstrang berechnet. Mit der Gleichgewichtsbedingung $A^T(p)F = w$ kann der sechsdimensionale Kraftvektor $w$ in den Seilkraftvektor $F$ transformiert werden.

7

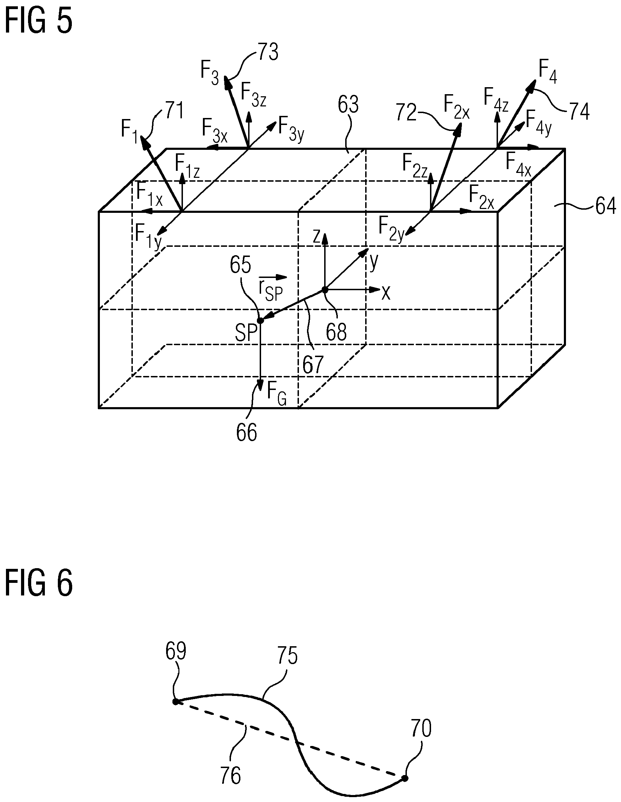

Der Seilkraftvektor $F = [F_1, ..., F_m]^T$ beinhaltet die betragsmäßige Seilkraft jedes Seils in Richtung der Antriebskoordinaten (siehe FIG 5). Das Aufstellen der Gleichgewichtsbedingung erfolgt anhand der geometrischen Anordnung der Seile. Die Matrix $A^T(p)$ beinhaltet unter anderem die m normierten Seilkraftrichtungsvektoren und die Lage der Kraftangriffspunkte.

Die Winkelbeschleunigung der m Antriebsstränge 60 ($\ddot{\psi} = [\ddot{\psi}_1, ..., \ddot{\psi}_m]^T$) ergibt sich aus einer kinematischen Transformation 52 der zweiten Ableitung von $p_{soll}$.

Die Darstellung nach FIG 5 zeigt beispielhaft eine Definition der Kraftvektoren für die Gleichgewichtsbedingungen in einem vereinfachten, leichter darstellbaren Fall einer Lastaufhängung mit 4 Seilen. Dargestellt sind die Kräfte 71, 72, 73, 74 an einem Spreader 63, welcher einen Container greift, mit einem Bezugskoordinatensystem 68 einem Schwerpunkt SP 65 und einem Versatz 67 des Schwerpunktes zum Nullpunkt des Bezugskoordinatensystems.

Die Darstellung nach FIG 6 zeigt eine optimierte Bahn 75. Beispielsweise kann ein kürzester Weg 76 zischen einem Startpunkt 69 und einem Endpunkt 70 bezüglich maximaler Seilkräfte optimiert werden, woraus sich die optimierte Bahn 75 ergibt.

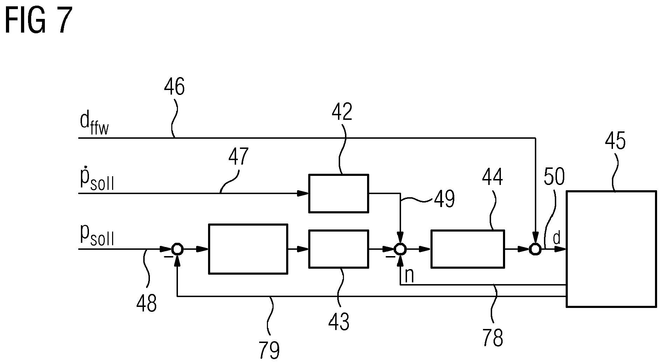

Die Darstellung nach FIG 7 zeigt eine Regelungsstruktur und basiert auf FIG 3. In FIG 7 ist eine Rückführung 79 der Position $p$ gezeigt, welche vom Wert 48 $p_{soll}$ subtrahiert wird und in die Lageregelung 41 eingeht. Der Ausgang der Lageregelung wird kinematisch transformiert 43 und mit der Rückführung 78 einer Istdrehzahl n des entsprechenden zu regelnden elektrischen Antriebes verknüpft.

**Patentansprüche**

1. Steuerungseinrichtung (12) für ein Hebezeug (1), mit einer kinematischen Transformation (42,43), wobei eine Raumlage eines Körpers (8,9) und eine Orientierungslage des Körpers (8,9) zur Transformation vorgesehen ist, wobei eine Vielzahl von elektrischen Antrieben ansteuerbar sind.

2. Steuerungseinrichtung (12) nach Anspruch 1, wobei das Hebezeug (1) für ein Bewegen des Körpers (8,9) durch das Hebezeug (1) überbestimmt ist, wobei eine Optimierungseinrichtung zur Optimierung von Seilkräften vorgesehen ist.

3. Steuerungseinrichtung (12) nach Anspruch 1 oder 2, welche einen Lageregler (41) aufweist, wobei der Lageregler (41) einen Eingang für die Raumlage und einen Eingang für die Orientierungslage aufweist.

4. Steuerungseinrichtung (12) nach einem der Ansprüche 1 bis 3, welche ein erstes Modell für den Körper (8,9) aufweist.

5. Steuerungseinrichtung (12) nach einem der Ansprüche 1 bis 4, welche einen Seilkraftrechner (53) aufweist.

6. Steuerungseinrichtung (12) nach einem der Ansprüche 1 bis 5, welche ein zweites Modell (54) für einen Antriebsstrang aufweist.

7. Steuerungseinrichtung (12) nach einem der Ansprüche 1 bis 6, welche eine Vorsteuerung (46) aufweist.

8. Verfahren zur Steuerung eines Hebezeuges (1), wobei zur Regelung von zumindest sechs Antrieben eine kinematische Transformation von Koordinaten eines Körpers (8,9) verwendet wird.

9. Verfahren nach Anspruch 8, wobei eine Vielzahl von elektrischen Antrieben zur Positionierung des Körpers (8,9) vorgesehen sind, wobei durch die Vielzahl der elektrischen Antriebe eine Überbestimmung erzeugt wird, wobei die Überbestimmung zu einer Verteilung von Kräften, welche auf Seile (7) wirken, verwendet wird.

10. Verfahren nach Anspruch 8 oder 9, wobei aus einem Sollgeschwindigkeitsverlauf einer Trajektorie des Körpers (8,9) unter Verwendung einer Kinematik-Transformation ein Drehzahlsollwertverlauf der Antriebe berechnet wird.

11. Verfahren nach einem der Ansprüche 8 bis 10, wobei eine Seilkraftberechung (53) verwendet wird.

12. Verfahren nach einem der Ansprüche 8 bis 11, wobei eine Vorsteuerung (46) verwendet wird.

13. Verfahren nach Anspruch 12, wobei zur Berechnung der Vorsteuerung ein Lastmodell (51) und/oder ein Antriebsstrangmodell (54) verwendet wird.

14. Verfahren nach einem der Ansprüche 8 bis 13, wobei eine Antriebsregelung in Abhängigkeit einer Hubhöhe regelt, insbesondere adaptiert, wobei die Antriebsregelung derart an eine Streckendynamik der Bewegung des Körpers angepasst wird.

15. Verfahren nach einem der Ansprüche 8 bis 14, wobei eine Lageregelung (41) in den Koordinaten des Körpers (8,9) erfolgt, wobei insbesondere eine Stellgröße für die Last über eine Kinematik-Transformation in Antriebskoordinaten umgerechnet wird.

16. Verfahren nach einem der Ansprüche 8 bis 15, wobei bei einem Hubseilwerk, welches überbestimmt ist und insbesondere mehr Antriebe als zu positionierende Freiheitsgrade aufweist, die zusätzlichen Freiheitsgrade für eine Optimierung der Vorsteuerung verwendet werden.

17. Verfahren nach einem der Ansprüche 8 bis 16, wobei zur Berechnung einer Trajektorie ein Maximalwert einer Beschleunigung in Abhängigkeit einer Hubhöhe adaptiert wird.

18. Verfahren nach einem der Ansprüche 8 bis 17, wobei zur Berechnung einer Trajektorie ein Maximalwert einer Beschleunigung in Abhängigkeit einer Schwerpunktlage des Körpers (8,9) adaptiert wird.

19. Verfahren nach einem der Ansprüche 8 bis 18, wobei eine Steuerungseinrichtung nach einem der Ansprüche 1 bis 7 verwendet wird.

FIG 1

FIG 2

## FIG 3

## FIG 4

## FIG 5

## FIG 6

## FIG 7

**Europäisches Patentamt**
**European Patent Office**
**Office européen des brevets**

# EUROPÄISCHER RECHERCHENBERICHT

Nummer der Anmeldung

EP 17 19 0169

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X<br><br><br>A | DE 199 18 449 A1 (NOELL STAHL UND MASCHINENBAU G [DE])<br>2. November 2000 (2000-11-02)<br>* das ganze Dokument *<br>----- | 1-4,<br>6-10,<br>12-17,19<br>5,11 | INV.<br>B66C13/08<br>B66C13/22 |
| A,D | WO 2016/161470 A1 (HANS KÜNZ GMBH [AT])<br>13. Oktober 2016 (2016-10-13)<br>* Zusammenfassung *<br>----- | 1,8 | |
| A | US 5 908 122 A (ROBINETT RUSH D [US] ET AL) 1. Juni 1999 (1999-06-01)<br>* Zusammenfassung *<br>* Spalte 9, Zeile 25 - Spalte 13, Zeile 32 *<br>* Abbildung 1 *<br>----- | 1 | |

**RECHERCHIERTE SACHGEBIETE (IPC)**

B66C

Der vorliegende Recherchenbericht wurde für alle Patentansprüche erstellt

| Recherchenort | Abschlußdatum der Recherche | Prüfer |
|---|---|---|
| Den Haag | 7. März 2018 | Sheppard, Bruce |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

........................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 19 0169

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

07-03-2018

| Im Recherchenbericht angeführtes Patentdokument | Datum der Veröffentlichung | Mitglied(er) der Patentfamilie | Datum der Veröffentlichung |
|---|---|---|---|
| DE 19918449 A1 | 02-11-2000 | KEINE | |
| WO 2016161470 A1 | 13-10-2016 | AT 516981 A1 | 15-10-2016 |
| | | AU 2016245321 A1 | 28-09-2017 |
| | | CA 2977991 A1 | 13-10-2016 |
| | | CN 107743473 A | 27-02-2018 |
| | | EP 3280674 A1 | 14-02-2018 |
| | | KR 20170134410 A | 06-12-2017 |
| | | US 2018029849 A1 | 01-02-2018 |
| | | WO 2016161470 A1 | 13-10-2016 |
| US 5908122 A | 01-06-1999 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2902356 A1
- DE 2002745 A1

- WO 2016161470 A1